# EUROPÄISCHE PATENTSCHRIFT

(11) **EP 3 938 154 B1**
(45) Veröffentlichungstag und Bekanntmachung des Hinweises auf die Patenterteilung: **21.08.2024**
(21) Anmeldenummer: 20729618.7
(22) Anmeldetag: 19.05.2020
(51) Int. Cl.: B25J 15/02

(54) **GREIFVORRICHTUNG**
GRIPPING APPARATUS
DISPOSITIF DE PRÉHENSION

(30) Priorität: 15.07.2019 DE 102019119125
(43) Veröffentlichungstag der Anmeldung: 19.01.2022
(73) Patentinhaber: Festo SE & Co. KG, 73734 Esslingen (DE)
(72) Erfinder: AEGERTER, Markus, 73776 Altbach (DE)
(74) Vertreter: Keller Schneider Patentanwaltsgesellschaft mbH
(86) Internationale Anmeldenummer: PCT/DE2020/100435
(87) Internationale Veröffentlichungsnummer: WO 2021/008644

(56) Entgegenhaltungen:
- EP-A1- 0 532 774
- EP-A1- 2 390 067
- DE-B3- 102005 046 160
- GB-A- 2 563 050

## Beschreibung

Die vorliegende Erfindung betrifft eine Greifvorrichtung zum Greifen von Objekten.

Greifvorrichtungen zum Greifen von Objekten sind im Stand der Technik hinlänglich bekannt. Ein Beispiel für den Einsatz von Greifvorrichtungen stellen Bestückungsautomaten dar, in denen Greifvorrichtungen zum Greifen von Bauelementen eingesetzt werden. Besondere Anforderungen werden bei derartigen Greifern im Bereich von Reinraumanwendungen wie beispielsweise bei Wafern oder auch bei Lebensmitteln gestellt. Ein derartiger Roboter-Greifer ist aus der Druckschrift DE 102005046160 B3 und eine Greifervorrichtung ist aus der Druckschrift DE 102009015975 A1 bekannt.

Die EP 2 390 067 A1 offenbart eine Greifvorrichtung mit Greifelementen, die über ein komplexes Hebelgetriebe mit einem Stellglied verbunden sind. Die Greifvorrichtung ist dabei derart ausgebildet, dass wenn das Stellglied mittels einer Magnetfeldkraft bewegt wird, die Greifelemente über das Hebelgetriebe von einer Offenstellung in eine Greifstellung bewegt werden.

Nachteilig im Stand der Technik ist, dass bekannte Greifvorrichtungen einen komplizierten Aufbau, meist mit einer Mehrzahl von mechanischen Einzelkomponenten, aufweisen. Negative Folgen sind hohe Herstellungskosten und ein hohes Eigengewicht. Zudem sind die bekannten Greifvorrichtungen in ihrem Aufbau und ihrer Funktionalität oft unflexibel und somit nicht ohne größeren Aufwand an spezifische Kundenwünsche anpassbar. Ein weiterer Nachteil besteht darin, dass defekte oder verschlissene Greifer nur mit erhöhtem Aufwand repariert oder gewechselt werden können.

Der Erfindung liegt daher die Aufgabe zugrunde, eine verbesserte Greifvorrichtung zu schaffen, welche mindestens einen der Nachteile aus dem Stand der Technik überwindet.

Erfindungsgemäß wird diese Aufgabe mit einer Greifvorrichtung nach dem Gegenstand des Anspruchs 1 gelöst.

Vorteilhafte und zweckmäßige Ausgestaltungen der erfindungsgemäßen Greifvorrichtung sind in den Unteransprüchen angegeben.

Erfindungsgemäß umfasst die Greifvorrichtung zum Greifen von Objekten einen hülsenartigen Grundkörper, einen im Grundkörper aufgenommenen Permanentmagnet, einen koaxial zum Permanentmagnet angeordnetes Ankerelement, welches zwischen einer permanentmagnetnahen ersten Position und einer permanentmagnetfernen zweiten Position überführbar ausgebildet ist. Ferner umfasst der hülsenartige Grundkörper zumindest zwei Greiffinger, die jeweils über einen Betätigungssteg mit dem Ankerelement verbunden ausgebildet sind. Die Greiffinger bewegen sich beim Überführen des Ankerelements in die erste Position zu einer Greifposition aufeinander zu und beim Überführen des Ankerelements in die zweite Position zu einer Freigabeposition voneinander weg. Zusätzlich umfasst die Greifvorrichtung eine schaltbare Spule, welche dazu ausgebildet ist im geschalteten Zustand ein dem Permanentmagnet entgegengesetztes magnetisches Feld zu erzeugen.

Der Vorteil der erfindungsgemäßen Greifvorrichtung besteht darin, dass die Greifvorrichtung durch die magnetische Anziehungskraft des Permanentmagnets auf das Ankerelement eine Greifbewegung durchführen kann. Dies geschieht völlig unabhängig von äu-ßeren Strom- oder Energiequellen. Die Freigabebewegung der Greifvorrichtung hingegen, wird durch Einschalten der schaltbaren Spule realisiert. Hierbei entsteht ein magnetisches Feld, dessen Magnetkraft dem Magnetfeld des Permanentmagnets entgegengesetzt ist. Hierdurch wird die magnetische Wirkung auf das Ankerelement zumindest neutralisiert, wodurch selbiges in die permanentmagnetferne zweite Position und die Greiffinger in die Freigabeposition überführt werden. Ein besonderer Vorteil ergibt sich hierbei dadurch, dass im Falle eines Stromausfalls das ergriffene Stückgut nicht herabfällt. Somit umfasst die Greifvorrichtung eine Sicherheitsfunktion, die als NC-Variante (Normally Closed) ausgebildet ist. Das Festhalten bzw. Greifen des Objekts erfolgt also im Ruhezustand, da ein ergriffenes Objekt nicht losgelassen wird, wenn der Antrieb, beispielsweise aufgrund einer unterbrochenen Energiezufuhr, ausfällt.

Nach einer bevorzugten Ausführungsform ist die Spule innerhalb des hülsenartigen Grundkörpers angeordnet. Dadurch besteht beispielsweise der technische Vorteil, dass die Greifvorrichtung besonders kompakt ausgebildet ist. Beispielsweise kann die Spule um den Permanentmagnet herum gewickelt sein.

Nach einer weiteren besonders bevorzugten Ausführungsform ist der hülsenartige Grundkörper und die Greiffinger als integrales einstückiges Bauteil ausgebildet. Dadurch wird beispielsweise der technische Vorteil erreicht, dass die Greifvorrichtung besonders einfach hergestellt werden kann. Im Falle einer Beschädigung des hülsenartigen Grundkörpers oder einem der Greiffinger, lässt sich die Greifvorrichtung sehr einfach reparieren, wodurch die reparaturbedingte Unterbrechung des Betriebs der Greifvorrichtung minimal gehalten wird.

Nach einer weiteren Ausführungsform ist ein Querschnitt jedes Greiffingers im Bereich einer Greiffingerwurzel am Übergang vom hülsenartigen Grundkörper zum Greiffinger reduziert ausgebildet. Dadurch wird beispielsweise der technische Vorteil erreicht, dass der Bereich des reduzierten Querschnitts besonders leicht biegbar ist. Wenn also das Ankerelement in die permanentmagnetnahe erste Position überführt wird, werden die Greiffinger über die Betätigungsstege in die Greifposition überführt. Dies geschieht primär durch die elastische Deformation der Greiffinger selbst im Bereich des deformierten Querschnitts. Ein weiterer Vorteil ergibt sich aus der Rückstellkraft der deformierten Greiffinger. Sobald die Magnetkraft des Permanentmagnets durch das Einschalten der elektrischen Spule neutralisiert wird, wird das Ankerelement durch die Rückstellkraft der elastisch deformierten Greiffinger in die permanentmagnetferne zweite Position überführt. Die Rückstellung entspricht der Freigabeposition der Greifvorrichtung.

Gemäß einer weiteren bevorzugten Ausführungsform, umfasst jeder Betätigungssteg sowohl ankerelementseitig als auch greiffingerseitig ein Festkörpergelenk. Festkörpergelenke entsprechen in etwa Filmscharnieren und sind grundsätzlich einteilig bzw. einstückig mit den beiden zu verbindenden Elementen ausgebildet. Derartige Scharniere bestehen im Wesentlichen aus einer dünnwandigen Verbindung, oft in Form eines Falzes, die durch ihre Biegsamkeit eine Drehung der verbundenen Elemente ermöglicht. Mittels der Festkörpergelenke sind einfache und kostengünstige Gelenkverbindungen bereitgestellt.

Um die Klemmkraft der Greifvorrichtung zu erhöhen ist zumindest ein Befestigungssteg mit dem zugeordneten Greiffinger in einem mittleren Bereich des Greiffingers zwischen Greiffingerwurzel und Greiffingerspitze verbunden. In einer vorteilhaften Ausführungsform ist der Befestigungssteg mit dem Greiffinger in einem vorderen Bereich des Greiffingers zwischen dem mittleren Bereich des Greiffingers und der Greiffingerspitze verbunden. Beispielsweise schließt eine Längsachse des Befestigungsstegs mit der Längsachse des hülsenartigen Grundkörpers einen Winkel von etwa 45° ein, wenn sich das Ankerelement in der permanentmagnetfernen zweiten Position befindet. Je näher der Befestigungssteg an der Greiffingerspitze mit dem Greiffinger verbunden ist, desto besser ist das Hebelverhältnis und damit die Klemmkraft.

Erfindungsgemäß vorteilhaft sind die Greiffinger federelastisch ausgebildet. Somit reduziert sich die elastische Deformation jedes Greiffingers nicht nur auf den querschnittsreduzierten Bereich an der Greiffingerwurzel. Zusätzlich findet die Deformation entlang des gesamten Greiffingers statt.

Nach einer besonders bevorzugten Ausführungsform, umfasst der hülsenartige Grundkörper vier Greiffinger. Durch den Einsatz von vier Greiffingern kann Stückgut optimal von vier Seiten gegriffen werden, wobei jeder Greiffinger eine identische Greifkraft zur Verfügung hat. In alternativen Anwendungsfällen umfasst die Greifvorrichtung nur zwei oder drei Greiffinger. Denkbar wäre jedoch ebenfalls eine größere Anzahl an Greiffingern.

In einer noch weiteren Ausführungsform weist der hülsenartige Grundkörper eine Führungsnut auf. Beispielsweise ist diese Führungsnut in einer axialen Längsrichtung zum Grundkörper der Greifvorrichtung ausgerichtet. Dadurch kann die Führungsnut zum vereinfachten Anordnen des hülsenartigen Grundkörpers an der Greifvorrichtung dienen. Dies bekommt insbesondere beim Austausch eines verschlissenen oder defekten Grundkörpers mit einem neuen Grundkörper Bedeutung. Beispielsweise kann an der Greifvorrichtung eine korrespondierende Führungsnase angeordnet werden, welche eine genaue Zuordnung des Grundkörpers an die Greifvorrichtung mit sich bringt. Dadurch wird die Montage eines Grundkörpers an der Greifvorrichtung stark vereinfacht.

Um den Grundkörper an der Greifvorrichtung sicher zu befestigen weist der hülsenartige Grundkörper eine Rastnase zum Fixieren des hülsenartigen Grundkörpers an der Greifvorrichtung auf. Die Rastnase kann beispielsweise mit einem an der Greifvorrichtung angeordneten Vorsprung korrespondieren und sichert den Grundkörper gegen ein unbeabsichtigtes Entfernen. In einer weiteren bevorzugten Ausführungsform ist die Rastnase derart ausgestaltet, dass sie beim Entfernen des Grundkörpers von der Greifvorrichtung nicht zerstörungsfrei entsichert werden kann. Mit anderen Worten muss die Rastnase beim Entfernen des Grundkörpers von der Greifvorrichtung abgebrochen werden. Dadurch ergibt sich der Vorteil, dass ein Grundkörper nicht wiederverwendet werden kann und durch einen neuen Grundkörper ersetzt werden muss. Dies erhöht die Prozesssicherheit und stellt beispielsweise sicher, dass kontaminierte Greifer nicht erneut zum Einsatz kommen.

Nach einer zusätzlichen Ausführungsform weisen die Greiffinger jeweils an ihren Greiffingerspitzen eine Greifkontur auf. Dabei ist die Greifkontur bevorzugt derart ausgebildet, dass ein ergriffenes Objekt rutschfest, zum Beispiel in einer Mulde, an einem Vorsprung oder mittels eines Rastelements, zwischen den Greiffingern gehalten wird. Ein Festhalten des Objekts wird dadurch zusätzlich stabilisiert. Beispielsweise ist die Greifkontur bevorzugt so ausgelegt, dass sich zwischen ihr und/oder zwischen den Greiffingern und dem Objekt ein Kraft-Formschluss ergibt. Das Objekt, zum Beispiel ein Werkstück, wird dadurch noch sicherer ergriffen bzw. gegriffen. Eine dafür aufgewendete Kraft kann somit reduziert werden, was zu weniger Energiebedarf und Materialbelastung führt.

Um ein Objekt noch sicherer greifen zu können sind die Greiffingerspitzen federelastisch ausgebildet. Die Rückstellkraft aufgrund der deformierten federelastischen Greiffingerspitzen, dient zusätzlich als Greifsicherung zu der bereits bestehenden Rückstellkraft resultierend aus den deformierten Greiffingern. Beispielsweise ist die Elastizität der Greiffingerspitzen gegenüber der Elastizität des Greiffingerkörpers zusätzlich erhöht. Dies verbessert das Greifen von Objekten und Stückgut und trägt somit zur Prozesssicherheit bei.

Um die Greifvorrichtung und insbesondere das Ankerelement vor Schmutz zu schützen, weist der hülsenartige Grundkörper ein Schutzelement auf, welches koaxial zum Ankerelement angeordnet ist. Eine Oberfläche des Schutzelements verläuft orthogonal zu Längsachse der Greifvorrichtung. Sie verhindert unmittelbaren Zugriff auf das Ankerelement.

Gemäß einer weiteren Ausführungsform weist der hülsenartige Grundkörper eine Aufnahme für das Ankerelement auf, wobei die Aufnahme über die Betätigungsstege mit den Greiffingern verbunden ist. Das Ankerelement kann beispielsweise auf die Aufnahme aufgeklebt werden. In Abhängigkeit des Herstellungsverfahrens kann das Ankerelement auch durch Umspritzen an der Aufnahme angeordnet werden. Die Aufnahme ermöglicht das Fixieren und Tragen des Ankerelements, wobei die Aufnahme selbst über die Festkörpergelenke mit den Betätigungsstegen verbunden ist.

Besonders bevorzugt sind Aufnahme, Betätigungssteg, Greiffinger und hülsenartigen Grundkörper einstückig aus einem Material hergestellt. Zusätzlich bevorzugt ist das Schutzelement mit der Aufnahme verbunden ausgebildet. Das Schutzelement kann hierbei nach der Montage des Grundkörpers von unten an der Greifvorrichtung angeordnet werden. Alternativ ist das Schutzelement jedoch auch einstückig mit den Bestandteilen Aufnahme, Betätigungsstege, Greiffinger und hülsenartigem Grundkörper einstückig aus einem Material hergestellt.

Erfindungsgemäß vorteilhaft ist der hülsenartige Grundkörper mittels eines generativen Fertigungsverfahrens hergestellt. Das generative Fertigungsverfahren, auch als 3D-Druck oder additive Fertigung bezeichnet, ermöglicht eine dreidimensionale Ausbildung eines Erzeugnisses direkt unter Zugrundelegung konstruktiv vorgegebener Daten in einem einzigen Arbeitsgang. Nach Beendigung des Arbeitsganges entsteht ein dreidimensionales einstückiges und integrales Erzeugnis, welches ohne weiteren Montageaufwand sofort einsatzbereit ist.

Alternativ hierzu kann der Grundkörper auch in einem Spritzgussverfahren hergestellt werden. Geeigneter Weise können hierbei faserverstärkte Kunststoffe eingesetzt werden, um die Einsatzdauer des Grundköpers zusätzlich zu erhöhen. Beispielsweise eignen sich hierfür glasfaserverstärkte oder kohlefaserverstärkte Kunststoffe.

Ausführungsbeispiele der Erfindung sind in den Zeichnungen dargestellt und werden im Folgenden näher beschrieben.

Es zeigen:
- Fig. 1: eine Schnittdarstellung einer Greifvorrichtung, und
- Fig. 2: eine Schnittdarstellung eines hülsenartigen Grundkörpers.

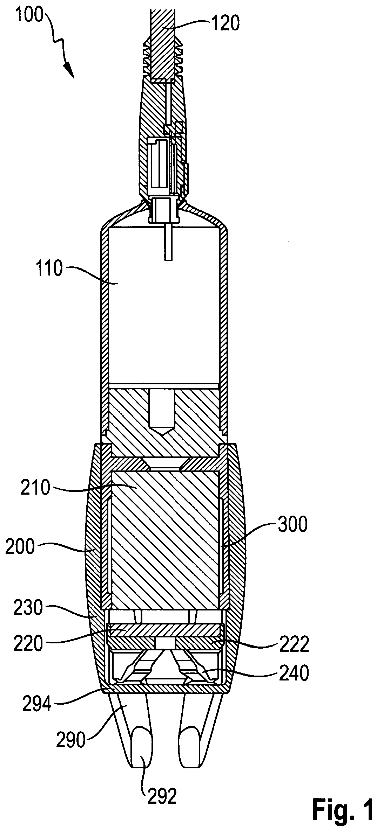

Die Figur 1 zeigt eine Schnittdarstellung einer Greifvorrichtung 100. Die Greifvorrichtung 100 umfasst einen Greifvorrichtungskörper 110, welcher an seinem oberen Ende einen Anschluss 120 aufweist. Der Anschluss 120 kann beispielsweise eine Stromzufuhr beinhalten. Des Weiteren können über den Anschluss 120 Steuersignale zum Betreiben der Greifvorrichtung 100 eingespeist werden. An einem unteren Abschnitt der Greifvorrichtung 100 ist ein hülsenartiger Grundkörper 200 angeordnet, welcher zur Umsetzung der Greifbewegung ausgebildet ist. Innerhalb des Grundkörpers 200 ist ein Permanentmagnet 210 angeordnet, welcher mit einem Ankerelement 220 in Wirkverbindung steht. Das Ankerelement 220 ist koaxial zu dem Permanentmagnet 210 angeordnet und kann durch die Anziehungskraft des Permanentmagnets 210 in eine permanentmagnetnahe erste Position überführt werden. Gegen die Anziehungskraft des Permanentmagnets 210 ist das Ankerelement 220 in eine permanentmagnetferne zweite Position überführbar. Die ersten Position und die zweite Position des Ankerelements 220 definieren das Bewegungsintervall, in welchem sich das Ankerelement 220 bewegen kann. Das Ankerelement 220 ist aus einem ferromagnetischen Material, wie beispielsweise Eisen oder Stahl, hergestellt.

Zusätzlich befindet sich im Bereich des Permanentmagnets 210 eine schaltbare Spule 300 welche dazu ausgebildet ist, im geschalteten Zustand ein magnetisches Feld zu erzeugen. Das magnetische Feld der schaltbaren Spule 300 ist im geschalteten Zustand dem Magnetfeld des Permanentmagnets 210 entgegengerichtet und neutralisiert dieses derart, dass auf das Ankerelement 220 keine resultierende magnetische Kraft mehr einwirkt. Somit kann durch Ein- und Ausschalten der schaltbaren Spule 300 das Magnetfeld bestimmt werden, welches die Position des Ankerelements 220 vorgibt. Wenn sich die schaltbare Spule 300 in einem stromlosen nichtgeschalteten Zustand befindet, wirkt die Magnetkraft des Permanentmagnets 210 auf das Ankerelement 220 ein und überführt dieses in die erste permanentmagnetnahe Position. Wenn die schaltbare Spule 300 bestromt wird und sich somit in einem eingeschalteten Zustand befindet, wird die Magnetkraft des Permanentmagnets 210 neutralisiert und das Ankerelement 220 wird durch eine Rückstellkraft der deformierten Greiffinger 230 in die zweite permanentmagnetferne Position überführt.

Das Ankerelement 220 ist ebenfalls innerhalb des hülsenartigen Grundkörpers 200 angeordnet und in einer Aufnahme 222 gelagert. Die Aufnahme 222 ist jeweils mittels eines Betätigungsstegs 240 mit einem zugeordneten Greiffinger 230 verbunden. In der Ausführungsform gemäß Figur 1 umfasst die Greifvorrichtung 100 insgesamt vier Greiffinger 230 die über jeweils einen Betätigungssteg 240 mit der Aufnahme 222 verbunden sind. Unterhalb der Aufnahme 222 befindet sich ein Schutzelement 294, welches das Innere der Greifvorrichtung 100 vor Verschmutzung schützt.

Am unteren Ende der Greiffinger 230 befinden sich Greiffingerspitzen 290, die jeweils eine Greifkontur 292 aufweisen. Zum verbesserten Greifen von Objekten oder Stückgut, sind die Greiffingerspitzen 290 federelastisch ausgebildet.

Der hülsenartige Grundkörper 200 ist von der Greifvorrichtung 100 entfernbar ausgebildet, da im Falle von Verschleiß oder einem Defekt schnell reagiert werden kann. Der hülsenartige Grundkörper 200 ist somit als Verschleißartikel ausgebildet, wogegen die Greifvorrichtung 100 eine größere Einsatzdauer ausgebildet ist.

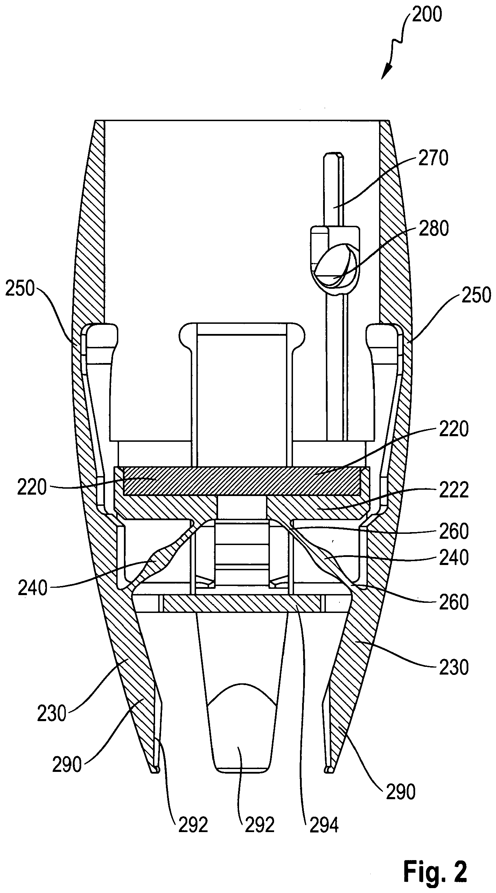

Die Figur 2 zeigt eine Schnittdarstellung eines hülsenartigen Grundkörpers 200, der wie gemäß der Figur 1 an einer Greifvorrichtung angeordnet werden kann. Der hülsenartige Grundkörper 200 umfasst gemäß dieser Ausführungsform insgesamt vier Greiffinger 230, wobei aufgrund der Schnittdarstellung nur drei Greiffinger 230 dargestellt sind. Der hülsenartige Grundkörper 200 umfasst an einem oberen Ende einen zylinderförmigen Abschnitt, von welchem ausgehend sich die Greiffinger 230 in einer Längsrichtung erstrecken.

Am zylinderförmigen Abschnitt des Grundkörpers 200 ist eine Führungsnut 270 in einer Längsrichtung des Grundkörpers 200 ausgebildet. Die Führungsnut 270 vereinfacht das Anordnen des Grundkörpers 200 an der Greifvorrichtung 100. Dies ist bei der Montage der Greifvorrichtung 100 und bei einem Wechsel des hülsenartigen Grundkörpers 200 von gesteigerter Relevanz. Zusätzlich weist der hülsenartige Grundkörper 200 eine Rastnase 280 auf. Die Rastnase 280 dient dem Fixieren des Grundkörpers 200 an der Greifvorrichtung 100. Die Greifvorrichtung 100 umfasst hierfür einen korrespondierenden Vorsprung, welcher zum Eingriff der Rastnase 280 ausgebildet ist. Hierdurch wird der Grundkörper 200 sicher an der Greifvorrichtung 100 fixiert.

Im Bereich eines Übergangs vom zylinderförmigen Abschnitt des Grundkörpers 200 zu den einzelnen Greiffingern 230 befindet sich eine Greiffingerwurzel 250. Die Greiffingerwurzel 250 verfügt lokal über einen reduzierten Querschnitt, um die Biegbarkeit der elastisch ausgestalteten Greiffinger 230 zu erhöhen. Durch den reduzierten Querschnitt liegt im Bereich der Greiffingerwurzel 250 die größte Deformation am gesamten Greiffinger 230.

Innerhalb des hülsenartigen Grundkörpers 200 und unterhalb des zylinderförmigen Abschnitts befindet sich ein Raum, welcher seitlich durch die Greiffinger 230 und nach unten von einem Schutzelement 294 begrenzt ist. Innerhalb dieses Raums befindet sich das Ankerelement 220, welches von einer Aufnahme 222 getragen wird. Das Ankerelement 220 und die Aufnahme 222 bewegen sich gemeinsam innerhalb des Raumes zwischen der ersten Position und der zweiten Position auf und ab. Hierbei arbeitet die Greifvorrichtung 100 vollständig verschleißfrei und das Ankerelement 220 steht während der Bewegung - abgesehen von der Aufnahme 222 - mit keinem anderen Bestandteil der Greifvorrichtung 100 in unmittelbarem Kontakt. An einer Unterseite der Aufnahme 222 befinden sich Betätigungsstege 240, die jeweils einem Greiffinger 230 zugeordnet und mit diesem verbunden sind.

Jeder einzelne Betätigungssteg 240 ist an seiner Oberseite mit der Aufnahme 222 als auch an seiner Unterseite mit einem Greiffinger 230 über ein Festkörpergelenk 260 verbunden. Das Festkörpergelenk 260 ermöglicht eine verschleißfreie Übertragung einer Bewegung des Ankerelements 220 bzw. der das Ankerelement 220 tragenden Aufnahme 222 auf die Greiffinger 230. Somit werden die Greiffinger 230 zu einer Greifbewegung aufeinander zubewegt, wenn das Ankerelement 220 durch die Magnetkraft des Permanentmagnets 210 in die erste permanentmagnetnahe Position überführt wird. Dies geschieht indem die Überführung des Ankerelements 220 in die erste Position über die Aufnahme 222 und die Betätigungsstege 240 auf die Greiffinger 230 übertragen wird.

Entsprechend werden die Greiffinger 230 zu einer Freigabeposition voneinander wegbewegt, wenn das Ankerelement 220 in die zweite permanentmagnetferne Position überführt wird. Dies geschieht indem die Spule 300 eingeschaltet wird, wodurch sich ein Magnetfeld aufbaut, welches dem Magnetfeld des Permanentmagnets 210 entgegengesetzt ist und dieses damit zumindest neutralisiert. Die Rückstellkraft der elastisch deformierten Greiffinger 230 überführt die Aufnahme 222 über die Betätigungsstege 240 zurück in die zweite permanentmagnetferne Position.

Unterhalb der Aufnahme 222 befindet sich ein Schutzelement 294, welches ein ungewolltes Eindringen von Schmutz verhindert. Das Schutzelement 294 ist unmittelbar mit der Aufnahme 222 verbunden, wodurch sich das Schutzelement 294 immer gemeinsam mit dem Ankerelement 220 zwischen der ersten und der zweiten Position auf und ab bewegt.

Am unteren Ende der Greiffinger 230 befinden sich Greiffingerspitzen 290, welche auf einer dem Raum des hülsenförmigen Grundkörpers 200 zugewandten Seite jeweils ein Greifkontur aufweisen.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Greifvorrichtung
- 110: Greifvorrichtungskörper
- 120: Anschluss
- 200: Hülsenartiger Grundkörper
- 210: Permanentmagnet
- 220: Ankerelement
- 222: Aufnahme
- 230: Greiffinger
- 240: Betätigungssteg
- 250: Greiffingerwurzel
- 260: Festkörpergelenk
- 270: Führungsnut
- 280: Rastnase
- 290: Greiffingerspitzen
- 292: Greifkontur
- 294: Schutzelement
- 300: Spule

## Patentansprüche

1. Greifvorrichtung (100) zum Greifen von Objekten, mit:
einem hülsenartigen Grundkörper (200),
einem im Grundkörper (200) aufgenommenen Permanentmagnet (210),
einem koaxial zum Permanentmagnet (210) angeordneten Ankerelement (220), welches zwischen einer permanentmagnetnahen ersten Position und einer permanentmagnetfernen zweiten Position überführbar ausgebildet ist, wobei
der hülsenartige Grundkörper (200) zumindest zwei Greiffinger (230) umfasst, die jeweils über einen Betätigungssteg (240) mit dem Ankerelement (220) verbunden ausgebildet sind, und sich die Greiffinger (230) beim Überführen des Ankerelements (220) in die erste Position zu einer Greifposition aufeinander zubewegen, und beim Überführen des Ankerelements (220) in die zweite Position zu einer Freigabeposition voneinander wegbewegen, und wobei
die Greifvorrichtung (100) eine schaltbare Spule (300) umfasst, welche dazu ausgebildet ist im geschalteten Zustand ein dem Permanentmagnet (210) entgegengesetztes magnetisches Feld zu erzeugen.

2. Greifvorrichtung (100) nach Anspruch 1, **dadurch gekennzeichnet, dass** die Spule (300) innerhalb des hülsenartigen Grundkörpers (200) angeordnet ist.

3. Greifvorrichtung (100) nach Anspruch 1 oder 2, **dadurch gekennzeichnet, dass** der hülsenartige Grundkörper (200) und die Greiffinger (230) als integrales einstückiges Bauteil ausgebildet ist.

4. Greifvorrichtung (100) nach einem der vorstehenden Ansprüche, **dadurch gekennzeichnet, dass** ein Querschnitt jedes Greiffingers (230) im Bereich einer Greiffingerwurzel (250) am Übergang vom hülsenartigem Grundkörper (200) zum Greiffinger (230) reduziert ausgebildet ist.

5. Greifvorrichtung (100) nach einem der vorstehenden Ansprüche, **dadurch gekennzeichnet, dass** jeder Betätigungssteg (240) sowohl ankerelementseitig als auch greiffingerseitig ein Festkörpergelenk (260) umfasst.

6. Greifvorrichtung (100) nach einem der vorstehenden Ansprüche, **dadurch gekennzeichnet, dass** die Greiffinger (230) federelastisch ausgebildet sind.

7. Greifvorrichtung (100) nach einem der vorstehenden Ansprüche, **dadurch gekennzeichnet, dass** der hülsenartige Grundkörper (200) vier Greiffinger (230) umfasst.

8. Greifvorrichtung (100) nach einem der vorstehenden Ansprüche, **dadurch gekennzeichnet, dass** der hülsenartige Grundkörper (200) eine Führungsnut (270) aufweist.

9. Greifvorrichtung (100) nach einem der vorstehenden Ansprüche, **dadurch gekennzeichnet, dass** der hülsenartige Grundkörper (200) eine Rastnase (280) zum Fixieren des hülsenartigen Grundkörpers (200) an der Greifvorrichtung (100) aufweist.

10. Greifvorrichtung (100) nach einem der vorstehenden Ansprüche, **dadurch gekennzeichnet, dass** die Greiffinger (230) jeweils an ihren Greiffingerspitzen (290) eine Greifkontur (292) aufweisen.

11. Greifvorrichtung (100) nach einem der vorstehenden Ansprüche, **dadurch gekennzeichnet, dass** die Greiffingerspitzen (290) federelastisch ausgebildet sind.

12. Greifvorrichtung (100) nach einem der vorstehenden Ansprüche, **dadurch gekennzeichnet, dass** der hülsenartige Grundkörper (200) ein Schutzelement (294) aufweist, welches koaxial zum Ankerelement (220) angeordnet ist.

13. Greifvorrichtung (100) nach einem der vorstehenden Ansprüche, **dadurch gekennzeichnet, dass** der hülsenartige Grundkörper (200) eine Aufnahme (222) für das Ankerelement (200) aufweist, wobei die Aufnahme (222) über die Betätigungsstege (240) mit den Greiffingern (230) verbunden ist.

14. Greifvorrichtung (100) nach Anspruch 13, **dadurch gekennzeichnet, dass** das Schutzelement (294) mit der Aufnahme (222) verbunden ausgebildet ist.

15. Greifvorrichtung (100) nach einem der vorstehenden Ansprüche, **dadurch gekennzeichnet, dass** der hülsenartige Grundkörper (200) mittels eines generativen Fertigungsverfahrens hergestellt ist.

## Claims

1. Gripping device (100) for gripping objects, with:
a sleeve-like base body (200),
a permanent magnet (210) accommodated in the base body (200),
an armature element (220) which is arranged coaxially with the permanent magnet (210) and is configured such that it is able to be transferred between a first position close to the permanent magnet and a second position remote from the permanent magnet, wherein
the sleeve-like base body (200) comprises at least two gripper fingers (230) which are each connected to the armature element (220) via an actuating bar (240), and the gripper fingers (230) move towards one another when the armature element (220) is transferred into the first position to a gripping position, and move away from one another when the armature element (220) is transferred into the second position to a release position, and wherein
the gripping device (100) comprises a switchable coil (300) which is designed to generate a magnetic field opposite to the permanent magnet (210) in the switched state.

2. Gripping device (100) according to claim 1, **characterized in that** the coil (300) is arranged inside the sleeve-like base body (200).

3. Gripping device (100) according to claim 1 or 2,
**characterized in that** the sleeve-like base body (200) and the gripper fingers (230) are designed as an integral one-piece component.

4. Gripping device (100) according to one of the preceding claims, **characterized in that** a cross-section of each gripper finger (230) is formed reduced in the region of a gripper finger base (250) at the transition from the sleeve-like base body (200) to the gripper finger (230).

5. Gripping device (100) according to one of the preceding claims, **characterized in that** each actuating bar (240) comprises a solid-body joint (260) both on the anchor element side and on the gripper finger side.

6. Gripping device (100) according to one of the preceding claims, **characterized in that** the gripper fingers (230) are configured to be resilient.

7. Gripping device (100) according to one of the preceding claims, **characterized in that** the sleeve-like base body (200) comprises four gripper fingers (230).

8. Gripping device (100) according to one of the preceding claims, **characterized in that** the sleeve-like base body (200) comprises a guide groove (270).

9. Gripping device (100) according to one of the preceding claims, **characterized in that** the sleeve-like base body (200) comprises a latching lug (280) for fixing the sleeve-like base body (200) to the gripping device (100).

10. Gripping device (100) according to one of the preceding claims, **characterized in that** the gripper fingers (230) each comprise a gripping contour (292) at their gripper finger tips (290).

11. Gripping device (100) according to one of the preceding claims, **characterized in that** the gripper finger tips (290) are configured to be resilient.

12. Gripping device (100) according to one of the preceding claims, **characterized in that** the sleeve-like base body (200) comprises a protective element (294) which is arranged coaxially to the armature element (220).

13. Gripping device (100) according to one of the preceding claims, **characterized in that** the sleeve-like base body (200) comprises a receptacle (222) for the armature element (200), wherein the receptacle (222) is connected to the gripper fingers (230) via the actuating bars (240) .

14. Gripping device (100) according to claim 13,
**characterized in that** the protective element (294) is configured to be connected to the receptacle (222).

15. Gripping device (100) according to one of the preceding claims, **characterized in that** the sleeve-like base body (200) is manufactured by means of a generative manufacturing process.

## Revendications

1. Dispositif de préhension (100) pour la préhension d'objets, avec :
un corps de base (200) en forme de douille,
un aimant permanent (210) logé dans le corps de base (200),
un élément d'ancrage (220) disposé de manière coaxiale à l'aimant permanent (210), qui est réalisé de manière à pouvoir être transféré entre une première position proche de l'aimant permanent et une deuxième position éloignée de l'aimant permanent, dans lequel
le corps de base (200) en forme de douille comprend au moins deux doigts de préhension (230), qui sont réalisés chacun par l'intermédiaire d'une barrette d'actionnement (240) reliée à l'élément d'ancrage (220), et les doigts de préhension (230) se rapprochent l'un de l'autre lors du transfert de l'élément d'ancrage (220) dans la première position vers une position de préhension, et s'éloignent l'un de l'autre lors du transfert de l'élément d'ancrage (220) dans la deuxième position vers une position de relâchement, et où
le dispositif de préhension (100) comprend une bobine commutable (300) qui est conçue pour générer, à l'état commuté, un champ magnétique opposé à l'aimant permanent (210) .

2. Dispositif de préhension (100) selon la revendication 1,
**caractérisé en ce que** la bobine (300) est disposée à l'intérieur du corps de base (200) en forme de douille.

3. Dispositif de préhension (100) selon la revendication 1 ou 2, **caractérisé en ce que** le corps de base (200) en forme de douille et les doigts de préhension (230) sont réalisés sous forme de composant monobloc intégral.

4. Dispositif de préhension (100) selon l'une des revendications précédentes, **caractérisé en ce qu'**une section transversale de chaque doigt de préhension (230) est réduite dans la zone d'une base de doigt de préhension (250) à la transition entre le corps de base (200) en forme de douille et le doigt de préhension (230) .

5. Dispositif de préhension (100) selon l'une des revendications précédentes, **caractérisé en ce que** chaque barrette d'actionnement (240) comprend une articulation à corps solide (260) aussi bien du côté de l'élément d'ancrage que du côté du doigt de préhension.

6. Dispositif de préhension (100) selon l'une des revendications précédentes, **caractérisé en ce que** les doigts de préhension (230) sont élastiques.

7. Dispositif de préhension (100) selon l'une des revendications précédentes, **caractérisé en ce que** le corps de base (200) en forme de douille comprend quatre doigts de préhension (230).

8. Dispositif de préhension (100) selon l'une des revendications précédentes, **caractérisé en ce que** le corps de base (200) en forme de douille présente une rainure de guidage (270) .

9. Dispositif de préhension (100) selon l'une des revendications précédentes, **caractérisé en ce que** le corps de base (200) en forme de douille comporte un ergot d'encliquetage (280) pour fixer le corps de base (200) en forme de douille sur le dispositif de préhension (100).

10. Dispositif de préhension (100) selon l'une des revendications précédentes, **caractérisé en ce que** les doigts de préhension (230) présentent chacun un contour de préhension (292) au niveau de leurs pointes de doigts de préhension (290).

11. Dispositif de préhension (100) selon l'une des revendications précédentes, **caractérisé en ce que** les pointes des doigts de préhension (290) sont élastiques.

12. Dispositif de préhension (100) selon l'une des revendications précédentes, **caractérisé en ce que** le corps de base (200) en forme de douille présente un élément de protection (294) qui est disposé de manière coaxiale à l'élément d'ancrage (220).

13. Dispositif de préhension (100) selon l'une des revendications précédentes, **caractérisé en ce que** le corps de base (200) en forme de douille présente un logement (222) pour l'élément d'ancrage (200), le logement (222) étant relié aux doigts de préhension (230) par les nervures d'actionnement (240).

14. Dispositif de préhension (100) selon la revendication 13, **caractérisé en ce que** l'élément de protection (294) est configuré pour être relié au logement (222).

15. Dispositif de préhension (100) selon l'une des revendications précédentes, **caractérisé en ce que** le corps de base (200) en forme de douille est fabriqué au moyen d'un procédé de fabrication générative.
